# EUROPÄISCHE PATENTSCHRIFT

(11) **EP 1 948 457 B1**
(45) Veröffentlichungstag und Bekanntmachung des Hinweises auf die Patenterteilung: **14.01.2015**
(21) Anmeldenummer: 06828543.6
(22) Anmeldetag: 17.11.2006
(51) Int. Cl.: B60J 7/14

(54) **FAHRZEUGDACH EINES CABRIOLETS MIT BEWEGBARER HECKSCHEIBE**
VEHICLE ROOF OF A CONVERTIBLE WITH DISPLACEABLE REAR WINDOW
TOIT D'UN CABRIOLET A LUNETTE ARRIERE MOBILE

(30) Priorität: 17.11.2005 DE 102005055383
(43) Veröffentlichungstag der Anmeldung: 30.07.2008
(73) Patentinhaber: Webasto SE, 82131 Stockdorf (DE)
(72) Erfinder: FRANCO, Massimo, I-10093 Collegno (IT); MARROCCO, Pasquale, I-10040 Rivalta (IT)
(74) Vertreter: Fischer & Konnerth
(86) Internationale Anmeldenummer: PCT/DE2006/002039
(87) Internationale Veröffentlichungsnummer: WO 2007/057003

(56) Entgegenhaltungen:
- WO-A-03/091052
- DE-A1- 4 324 708
- US-B2- 6 866 324

## Beschreibung

Die Erfindung betrifft ein Fahrzeugdach eines Cabriolets mit einem vorderen Dachteil und einem eine Heckscheibe enthaltenden und an der Karosserie angelenkten hinteren Dachteil, die miteinander gelenkig verbunden sind und zwischen einer Schließstellung über dem Fahrzeuginnenraum und einer heckseitigen Ablagestellung verstellbar sind, wobei die am hinteren Dachteil schwenkbar gelagerte Heckscheibe an ihrem Vorderrand mittels eines am vorderen Dachteil schwenkbar gelagerten Steuerlenkers einer Steuerkinematik mit dem vorderen Dachteil verbunden ist und in Ablagestellung eine gegenüber dem hinteren Dachteil angehobene Position einnimmt.

Aus der DE 199 36 252 C2 ist ein Fahrzeugdach bekannt geworden, bei dem die Verstellung der Heckscheibe gegenüber dem hinteren Dachteil beim Ablegen des Daches mittels einer kinematischen Zwangssteuerung kontinuierlich erfolgt. Die kinematische Zwangssteuerung wird über einen Verstellmechanismus hergestellt, der z. B. ein Viergelenk und einen damit verbundenen Steuerhebel aufweist, welcher an einem seitlichen Mittelabschnitt der Heckscheibe angreift. Über diesen Steuerhebel wird die Heckscheibe bei geschlossenem Dach in ihrer Schließstellung am hinteren Dachteil gehalten und bei abgelegtem Dach gegenüber dem hinteren Dachteil angehoben gehalten.

Aus der US 6,866,324 B2 ist ein Fahrzeugdach bekannt geworden, das gemäß einem ersten Ausführungsbeispiel entsprechend dem in der voranstehend genannten DE 199 36 252 C2 gebildet ist und die Heckscheibe relativ zu den C-Säulen mittels eines Steuerhebels verschwenkt, der den vorderen Lenker des das Dach lagernden Viergelenks mit der Heckscheibe verbindet. Gemäß einem zweiten Ausführungsbeispiel des Fahrzeugdaches ist ein jeweiliger Lenker einerseits am Vorderrand der Heckscheibe und andererseits am Hinterrand der Dachschale des vorderen Dachteils in jeweiligen Gelenken schwenkbar angelenkt. Der Lenker steuert die Relativbewegung des Vorderrandes der Heckscheibe gegenüber den seitlichen C-Säulen und hebt den Vorderrand der Heckscheibe bei abgelegtem Dach gegenüber den seitlichen C-Säulen an.

DE 198 07 490 C1 offenbart ein umwandelbares Hardtop-Fahrzeugdach mit einem vorderen Dachteil und einem hinteren Dachteil, die zum Ablegen des Daches um eine fahrzeugfeste Hauptdrehachse in einen heckseitigen Ablageraum verschwenkbar sind. Eine Heckscheibe ist am hinteren Dachteil um eine unterrandseitige Schwenklagerachse gegenüber den seitlichen C-Säulen des hinteren Dachteils schwenkbar gelagert. Ein Schlepphebel ist einerseits an einer Anlenkstelle im hinteren Bereich der Heckscheibe und andererseits an einem karosseriefesten Gelenk derart angelenkt, dass beim Ablegen des hinteren Dachteils die Heckscheibe mittels des Schlepphebels gegenüber den seitlichen C-Säulen in eine angehobene Ablagestellung verschwenkt wird.

Bei dem aus der DE 199 32 503 A1 bekannten Fahrzeugdach ist die am hinteren Dachteil schwenkbar gelagerte Heckscheibe mittels eines eigenen Antriebs gegenüber dem hinteren Dachteil verschwenkbar.

Der Erfindung liegt die Aufgabe zugrunde, ein eingangs genanntes Fahrzeugdach zu schaffen, bei dem die Anbindung der Heckscheibe an das vordere Dachteil und ihre Bewegungssteuerung verbessern ist.

Die Aufgabe wird bei dem oben genannten Fahrzeugdach erfindungsgemäß dadurch gelöst, dass ein an der Heckscheibe frontseitig angebrachtes Schwenklagerteil der Steuerkinematik an einer Führung des Steuerlenkers verschiebbar aufgenommen ist. Durch die verschiebbare Lagerung des Schwenklagerteils an dem Steuerlenker können Ausgleichsbewegungen ausgeführt werden, die ein verbessertes Bewegungsverhalten der Steuerkinematik und der Heckscheibe beim Ablegen des Daches ermöglichen.

Vorteilhafte Ausgestaltungen der Erfindung sind in den Unteransprüchen angegeben.

Vorzugsweise enthält das hintere Dachteil seitliche C-Säulen und die Heckscheibe ist um eine an ihrem Hinterrand angeordnete Schwenkachse relativ zu den CSäulen verschwenkbar gelagert. Jede der beiden C-Säulen ist dann an einem hinteren Lenker eines das Dach bewegbar lagernden Viergelenks angebracht.

Zweckmäßigerweise ist ein Anschlag zum Begrenzen des Schwenkweges des Steuerlenkers vorgesehen, so dass insbesondere bei geschlossenem Dach die Heckscheibe über den an dem Anschlag anliegenden Steuerlenker in einer definierten Schließstellung angeordnet ist.

Für ein verbessertes Bewegungsverhalten kann vorgesehen sein, dass das Schwenklagerteil, das z. B. als Bolzen gebildet ist, der an der Heckscheibe bzw. an einem Rahmen der Heckscheibe angebracht ist, an der Führung zwischen einer der Schwenkachse des Steuerlenkers benachbarten inneren Stellung und einer äußeren Stellung verstellbar geführt ist.

Gemäß einer bevorzugten Gestaltung ist das Schwenklagerteil bei geschlossenem Dach und einer ersten Schwenkstellung des Steuerlenkers mittels eines Steuerteils in der äußeren Stellung angeordnet.

Wenn das Schwenklagerteil beim Öffnen des Daches seine Schwenkstellung relativ zum Steuerlenker verändert und dabei das Steuerteil eine inaktive Stellung einnimmt, kann das Schwenklagerteil eine Ausgleichsbewegung entlang der Führung des Steuerlenkers ausführen.

Vorzugsweise ist eine karosserieseitige Abstützung vorgesehen, die die Heckscheibe beim Öffnen des Daches vor Erreichen der Ablagestellung des hinteren Dachteils bzw. der C-Säulen abstützt. Dann kann auf dem letzten Bewegungsweg beim Öffnen des Daches die auf der Abstützung aufliegende Heckscheibe mittels des Schwenklagerteils den ausgeschwenkten Steuerlenkers in seine erste Schwenkstellung gegen den Anschlag zurückschwenken, während das hintere Dachteil bzw. die C-Säulen in ihre Ablagestellung relativ zur Heckscheibe absinken. Die Heckscheibe ist damit in ihrer Ablagestellung definiert festgelegt. Schließlich kann das Schwenklagerteil auf dem letzten Bewegungsweg beim Öffnen des Daches eine Längsbewegung an der Führung in die äußere Stellung ausführen.

Gemäß einer bevorzugten Gestaltung ist das Steuerteil als Steuernocken gebildet, der drehfest mit dem Schwenklagerteil verbunden ist und sich an einer am Steuerlenker gebildeten Stützfläche abstützt.

Wenn aufgrund der Gestaltung der Steuer- und Lagermechanik die Heckscheibe beim Ablegen des Daches eine Relativbewegung gegenüber der Abstützung ausführt, ist es vorteilhaft, wenn die zumindest eine Abstützung eine Rolle enthält, auf dem bzw. der die Heckscheibe aufliegt. Die Rolle ermöglicht eine einfache Ausgleichsbewegung, so daß die Heckscheibe nicht auf einer feststehenden Auflage gleiten muß.

Vorzugsweise stützt jeweils eine Abstützung die Heckscheibe an ihren gegenüberliegenden Seitenrändern insbesondere nahe ihrem Oberrand ab. Damit bleibt der Bereich unter der Heckscheibe zum Beladen unbehindert.

Das Dach ist insbesondere ein Hardtop-Dach eines Fahrzeuges, jedoch kann es auch als Softtop gebildet sein oder Softtopelemente aufweisen.

Nachfolgend wird das Fahrzeugdach anhand eines Ausführungsbeispiels unter Bezugnahme auf die Zeichnung näher erläutert. Es zeigt:
- Fig. 1: in einer seitlichen Draufsicht ein Fahrzeugdach mit einem vorderen Dachteil und einem hinteren Dachteil in Schließstellung über einem Fahrzeuginnenraum;
- Fig. 2: in einer Ansicht gemäß Fig. 1 das Fahrzeugdach in einer ersten Zwischenstellung beim Öffnungsvorgang;
- Fig. 3: in einer Ansicht gemäß Fig. 1 das Fahrzeugdach in einer zweiten Zwischenstellung beim Öffnungsvorgang;
- Fig. 4: in einer Ansicht gemäß Fig. 1 das Fahrzeugdach in einer geöffneten Ablagestellung;
- Fig. 5: in einer Innenansicht die rechte Seite des geschlossenen Daches;
- Fig. 6: in einer Innenansicht gemäß Fig. 5 in vergrößerter Darstellung eine Steuerkinematik einer am hinteren Dachteil verstellbar gelagerten Heckscheibe;
- Fig. 7: in einer Innenansicht das gemäß Fig. 5 geschlossene hintere Dachteil mit einer Schwenklagerung der Heckscheibe;
- Fig. 8: in einer Ansicht gemäß Fig. 5 das Dach beim Öffnungsvorgang in einer Zwischenstellung;
- Fig. 9: in einer Innenansicht gemäß Fig. 8 in vergrößerter Darstellung die Steuerkinematik des in Zwischenstellung angeordneten Daches;
- Fig. 10: in einer Draufsicht die Steuerkinematik in der Stellung gemäß Fig. 8;
- Fig. 11: in einer Innenansicht gemäß Fig. 9 die Steuerkinematik des in einer weiteren Zwischenstellung angeordneten Daches;
- Fig. 12: in einer Draufsicht die Steuerkinematik in der Stellung gemäß Fig. 11;
- Fig. 13: in einer Draufsicht auf die seitliche Innenseite des Daches die Steuerkinematik in einer Zwischenstellung des Daches, wobei die Heckscheibe auf einer karosserieseitigen Abstützung aufliegt;
- Fig. 14: in einer Ansicht gemäß Fig. 13 die Steuerkinematik bei vollständig abgelegtem Dach und maximaler Anhebung der Heckscheibe;
- Fig. 15: in einer Draufsicht auf die seitliche Innenseite des Daches die Steuerkinematik bei vollständig abgelegtem Dach und maximaler Anhebung der Heckscheibe; und
- Fig. 16: in einer Außenansicht die Steuerkinematik bei vollständig abgelegtem Dach und maximaler Anhebung der Heckscheibe.

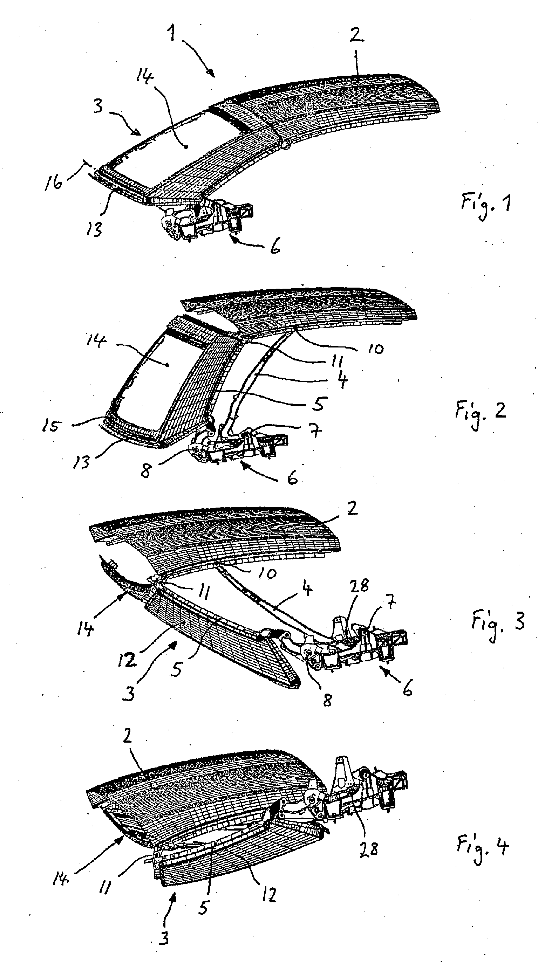

Ein Hardtop-Dach 1 eines Fahrzeugs enthält ein vorderes Dachteil 2 und ein hinteres Dachteil 3, die zwischen einer Schließstellung (Fig. 1) über dem Fahrzeuginnenraum und einer Offenstellung (Fig. 4), in der sie in einem heckseitigen Ablageraum oder Verdeckkasten abgelegt sind, verstellbar sind. Ein solches Dach ist grundsätzlich aus der DE 199 36 252 C2 oder der US 6,866,324 B2 bekannt. Das Dach 1 ist zur Fahrzeuglängsachse mit beidseits gleichen Lager- und Antriebseinrichtungen im wesentlichen symmetrisch aufgebaut, so daß die Beschreibung des Daches 1 im wesentlichen anhand der Langer- und Antriebseinrichtungen einer Seite erfolgt.

Das Dach 1 ist an der Karosserie mittels einer Lagereinrichtung in Gestalt z. B. eines Viergelenks bewegbar gelagert, das einen vorderen Lenker 4 und einen hinteren Lenker 5 aufweist, die einerseits an einem karosseriefesten Hauptlager 6 in Schwenkachsen 7 bzw. 8 schwenkbar gelagert und andererseits an einem Trägerteil 9 in Schwenkachsen 10 bzw. 11 schwenkbar angelenkt sind. An dem Trägerteil 9 ist das insbesondere hartschalige vordere Dachteil 2 befestigt.

Das hintere Dachteil 3 enthält seitlich jeweils eine an dem hinteren Lenker 5 angebrachte C-Säule 12. Die beiden sich gegenüberliegenden C-Säulen 12 sind nur an ihrem Unterrand mittels eines Querteils 13, z. B. einem Rahmen, der auch am jeweiligen hinteren Lenker 5 befestigt sein kann, direkt miteinander verbunden. In der Öffnung zwischen den beiden C-Säulen 12 ist eine Heckscheibe 14 angeordnet, die an ihrem Unter- oder Hinterrand 15 um eine Schwenkachse 16 am Querteil 13 und gegenüber den beiden C-Säulen 12 schwenkbar gelagert ist. Die Heckscheibe 14 enthält zumindest an ihrem Oberrand einen Scheibenrahmen 17, an dem seitlich jeweils eine Halterung 18 mit einem nach vorne ragenden Arm 19 befestigt ist, an dem ein seitlich abstehender Lagerbolzen 20 angebracht ist, der Teil einer Steuerkinematik zur Bewegungssteuerung der Heckscheibe 14 relativ zu den C-Säülen 12 ist. Der Lagerbolzen 20 ist in einem Langloch 21 verschiebbar aufgenommen, das an einem Steuerlenker 22 gebildet ist, der an dem Trägerteil 9 des vorderen Dachteils 2 um eine Schwenkachse 23 schwenkbar gelagert ist.

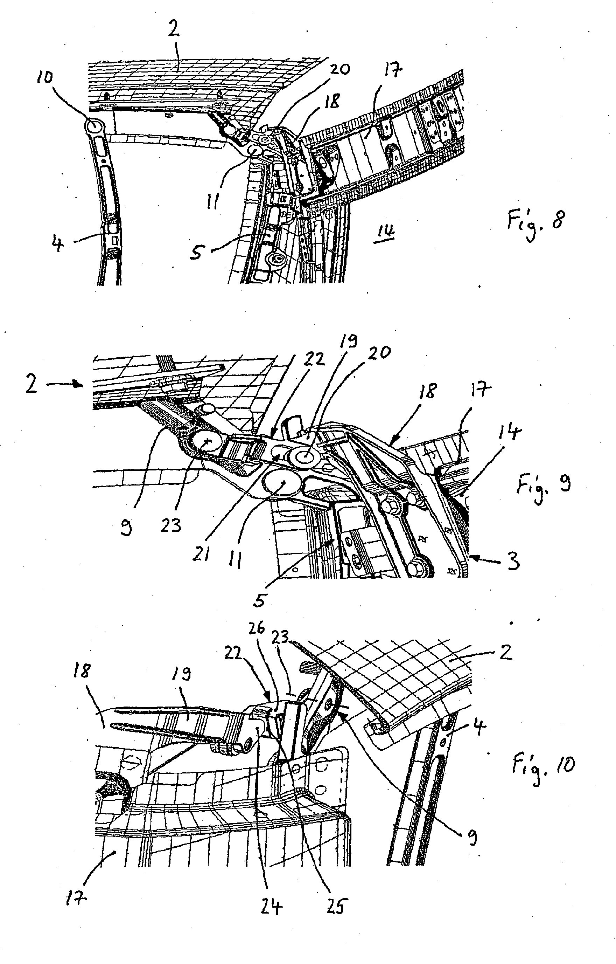

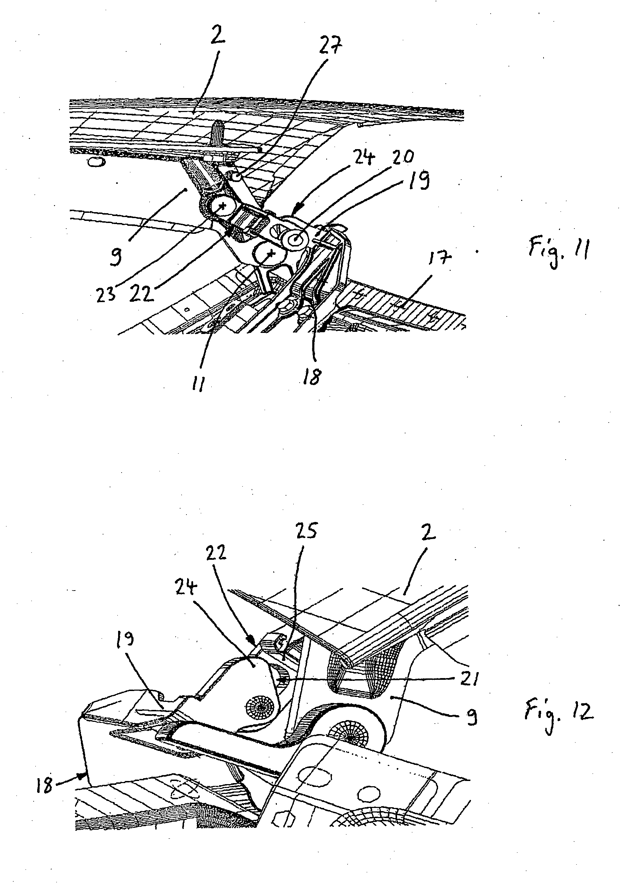

Das Vorderende des Arms 19 der Halterung 18 enthält einen Steuernocken 24 (siehe insbes. Fig. 10 und 12), der über die Achse des Lagerbolzens 20 hinaus ragt und am Arm 19 derart angeordnet ist, dass er in Abhängigkeit der Stellung der Halterung 18 zu dem Steuerlenker 22 an einer Stützfläche 25, die an einer Schulter 26 des Steuerlenkers 22 gebildet ist, in Stützeingriff kommen kann und damit die Position des Lagerbolzens 20 im Langloch 21 bestimmen kann.

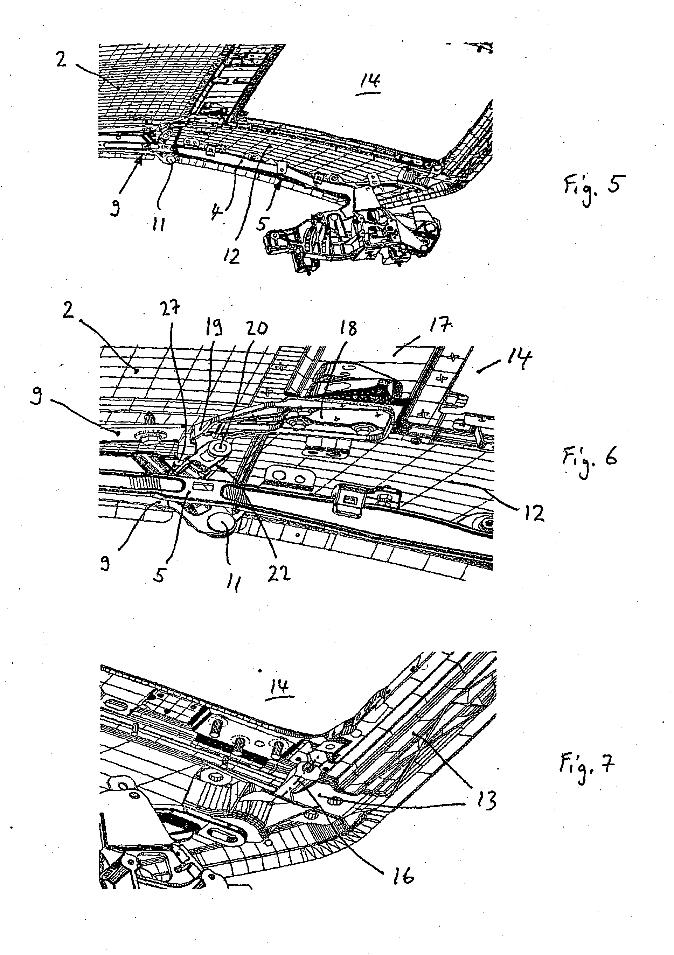

Bei geschlossenem Dach 1 (siehe Fig. 1, 5 und 6) hält die Steuerkinematik die Heckscheibe 14 in ihrer Schließstellung bündig zu den seitlichen C-Säulen 12 und zu dem vorderen Dachteil 2. In dieser Stellung erstreckt sich der zur Steuerkinematik gehörende Arm 19 der Halterung 18 nach vorne unter das Dachteil 2 und hält mittels des Lagerbolzens 20 den Steuerlenker 22 in einer oberen Schwenkstellung, in der dieser an einem am Trägerteil 9 fest angeordneten Anschlag 27 anliegt. Der Steuernocken 24 ragt in dieser Stellung des Arms 19 zum Steuerlenker 22 mit seinem bezüglich der Achse des Lagerbolzens 20 maximalen Hub gegen die Stützfläche 25 und hält aufgrund seines Steuerkontaktes an der Stützfläche 25 den Lagerbolzen 20 in dem Langloch 21 in der ersten äußeren Endstellung, in der er sich in maximalem Abstand zur Schwenkachse 23 des Steuerlenkers 22 befindet.

Zum Öffnen des Daches wird ein jeweiliger am Hauptlager 6 angeordneter seitlicher Hydraulikzylinder 28 betätigt und ausgefahren, der über ein Zwischengetriebe den hinteren Lenker 5 und damit das hintere Dachteil 3 nach hinten verschwenkt (Fig. 2). Aufgrund der Viergelenkanordnung der Lenker 4 und 5 verschwenkt das vordere Dachteil 2 um die Schwenkachse 11 gegen das hintere Dachteil 3 und der Arm 19 der mit der Heckscheibe 14 verbundenen Halterung 18 schwenkt den Steuerlenker 22 um seine Achse 23 nach unten, so dass zunächst ihre relative Stellung zueinander beibehalten bleibt und der Steuernocken 24 mit seiner maximalen Nockenhöhe in Kontakt mit der Stützfläche 25 bleibt. Dabei zieht aufgrund der dargestellten Kinematik die Halterung 18 den vorderen Scheibenrahmen 17 der Heckscheibe 14 gegen die Schwenkachse 11 (Fig. 8 bis 10) und schwenkt diese um ihre untere Schwenkachse 16 relativ zu den C-Säulen 12 des hinteren Dachteils 3 einwärts bzw. zu ihrer Innenseite hin.

Beim weiteren Öffnen des Daches (siehe Fig. 3 sowie 11 und 12) erreicht das hintere Dachteil 3 eine weitgehend umgeschwenkte Stellung und das vordere Dachteil 2 senkt sich gegen die Innenseite des hinteren Dachteils 3. Der Arm 19 der Halterung 18 hat sich relativ zum Steuerlenker 22 weiter verschwenkt, so dass der Steuernocken 24 außer Eingriff von der Stützfläche 25 ist und sich von dieser entfernt hat. Damit kann der Lagerbolzen 20 im Langloch 21 eine Längsausgleichsbewegung ausführen. Das Gewicht der Heckscheibe 14 hält den Lagerbolzen 20 im Langloch 21 des Steuerlenkers 22 z. B. weiterhin in seiner äußeren Stellung. Der Steuerlenker 22 hält über den Lagerbolzen 20 und den Arm 19 weiterhin die Heckscheibe 14 gegenüber den beiden C-Säulen 12 angehoben bzw. einwärts verschwenkt.

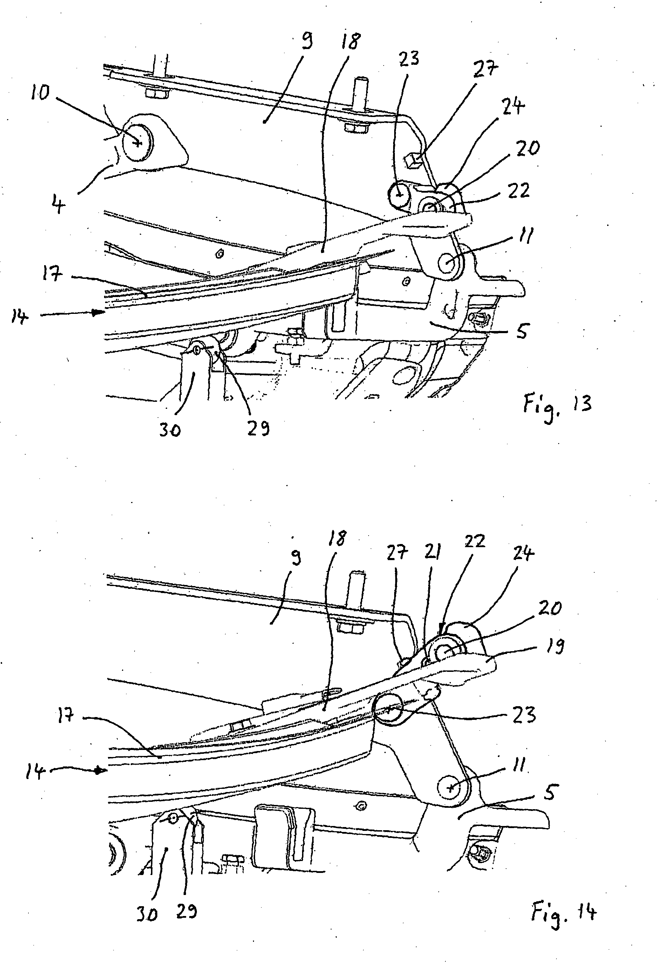

Kurz vor dem Erreichen der Ablageposition des Daches 2 legt sich die Heckscheibe auf eine karosserieseitige Abstützung 29, z. B. eine jeweilige an einer Halterung 30 gelagerte seitliche Stützrolle, die die Heckscheibe 14 insbesondere an ihrem Seitenrand nahe dem Oberrand abstützt (Fig. 13). Der Lagerbolzen 20 nimmt eine in Richtung zur Schwenkachse 23 des Steuerlenkers 22 einwärts verlagerte Stellung ein.

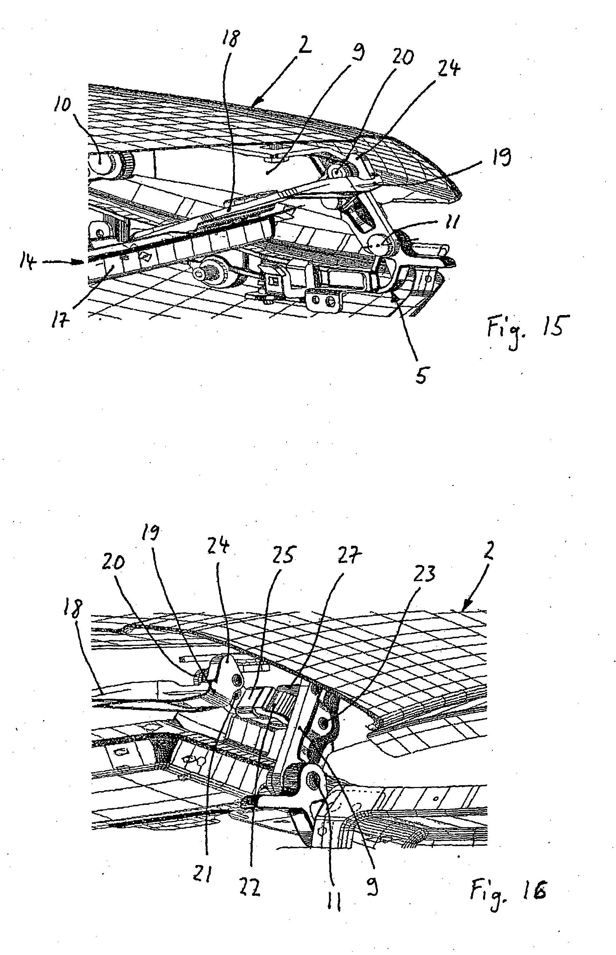

Beim weiteren Ablegen des Daches 2 bewegen sich die C-Säulen 12 in ihre endgültige Ablagestellung abwärts, während über die abgestützte Heckscheibe 14 und den Arm 19 der Lagerbolzen 20 in dem Langloch 21 eine Ausgleichsbewegung in Richtung zur äußeren Stellung ausführt und gleichzeitig den Steuerlenker 22 wieder nach oben gegen den Anschlag 27 verschwenkt (siehe Fig. 14 bis 16).

In der abgelegten Endstellung des Daches 2 (siehe Fig. 4 und 14 bis 16) ruht somit die Heckscheibe 14, die um ihre Schwenkachse 23 gegenüber den seitlichen C-Säulen 12 maximal nach oben verschwenkt ist, im Bereich ihres Oberrandes auf der Abstützung 29 und ist nach oben hin über den Steuerlenker 22 an dem Anschlag 27 spielfrei abgestützt.

Die Abstützung 29 ist zweckmäßigerweise z. B. als Kunststoff oder Gummirolle gebildet, so daß die Heckscheibe 14 beim Ablegen eine ausgleichende Bewegung auf der Rolle ausführen kann.

Das Schließen des abgelegten Daches 2 erfolgt in entgegengesetztem Bewegungsablauf. Mittels des jeweiligen Hydraulikzylinders 28 wird der hintere Lenker 5 nach oben verschwenkt, wobei die C-Säulen 12 des hinteren Dachteils 3 angehoben werden und die Heckscheibe 14 aufgrund ihres Gewichts zunächst noch auf der jeweiligen Abstützung 29 bzw. Rolle liegen bleibt. Der Lagerbolzen 20 bewegt sich im Langloch 21 des Steuerlenkers 22 und durch die relative Verschwenkung des Arms 19 zum Steuerlenker 22 kommt der Steuernocken 24 wieder in Eingriff an der Stützfläche 25. Über die Relativbewegung der C-Säulen 12 zum vorderen Dachteil 2 bzw. zu dessen Trägerteil 9 verschwenkt der Arm 19 gegenüber dem Steuerlenker 22 in die Ausgangsstellung und der Steuernocken 24 erreicht seine maximale Hubstellung an der Stützfläche 25, so daß der Lagerbolzen 20 wieder in der äußeren Stellung im Langloch 21 angeordnet ist.

Schließlich verschwenkt die Antriebseinrichtung bzw. der Hydraulikzylinder 28 das Dach 1 bis in die in Fig. 1 gezeigte Schließstellung, in der das vordere Dachteil 2 an einem Windlauf verriegelt gehalten ist. Diese Verriegelung ist jedoch nicht Gegenstand dieser Anmeldung und daher hier weder beschrieben oder dargestellt.

**Bezugszeichenliste**

| | | | |
|---|---|---|---|
| 1 | Hardtop-Dach | 16 | Schwenkachse |
| 2 | vorderes Dachteil | 17 | Scheibenrahmen |
| 3 | hinteres Dachteil | 18 | Halterung |
| 4 | vorderer Lenker | 19 | Arm |
| 5 | hinterer Lenker | 20 | Lagerbolzen |
| 6 | Hauptlager | 21 | Langloch |
| 7 | Schwenkachse | 22 | Steuerlenker |
| 8 | Schwenkachse | 23 | Schwenkachse |
| 9 | Trägerteil | 24 | Steuernocken |
| 10 | Schwenkachse | 25 | Stützfläche |
| 11 | Schwenkachse | 26 | Schulter |
| 12 | C-Säule | 27 | Anschlag |
| 13 | Querteil | 28 | Hydraulikzylinder |
| 14 | Heckscheibe | 29 | Abstützung |
| 15 | Unter- oder Hinterrand | 30 | Halterung |

## Patentansprüche

1. Fahrzeugdach (1) eines Cabriolets mit einem vorderen Dachteil (2) und einem eine Heckscheibe (14) enthaltenden und an der Karosserie angelenkten hinteren Dachteil (3), die miteinander gelenkig verbunden sind und zwischen einer Schließstellung über dem Fahrzeuginnenraum und einer heckseitigen Ablagestellung verstellbar sind,
wobei die am hinteren Dachteil (3) schwenkbar gelagerte Heckscheibe (14) an ihrem Vorderrand mittels eines am vorderen Dachteil (2) schwenkbar gelagerten Steuerlenkers (22) einer Steuerkinematik mit dem vorderen Dachteil (2) verbunden ist und in Ablagestellung eine gegenüber dem hinteren Dachteil (3) angehobene Position einnimmt,
**dadurch gekennzeichnet,**
**dass** ein an der Heckscheibe (14) frontseitig angebrachtes Schwenklagerteil (20) der Steuerkinematik an einer Führung (21) des Steuerlenkers (22) verschiebbar aufgenommen ist.

2. Fahrzeugdach nach Anspruch 1,
**dadurch gekennzeichnet, dass** das hintere Dachteil (3) seitliche C-Säulen (12) aufweist und dass die Heckscheibe (14) um eine an ihrem Hinterrand (15) angeordnete Schwenkachse (16) relativ zu den C-Säulen (12) verschwenkbar gelagert ist.

3. Fahrzeugdach nach Anspruch 1 oder 2,
**dadurch gekennzeichnet, dass** ein Anschlag (27) zum Begrenzen des Schwenkweges des Steuerlenkers (22) vorgesehen ist.

4. Fahrzeugdach nach einem der Ansprüche 1 bis 3,
**dadurch gekennzeichnet, dass** das Schwenklagerteil (20) an der Führung (21) zwischen einer der Schwenkachse (23) des Steuerlenkers (22) benachbarten inneren Stellung und einer äußeren Stellung verstellbar geführt ist.

5. Fahrzeugdach nach einem der Ansprüche 1 bis 4,
**dadurch gekennzeichnet, dass** das Schwenklagerteil (20) bei geschlossenem Dach (1) und einer ersten Schwenkstellung des Steuerlenkers (22) mittels eines Steuerteils (24) in der äußeren Stellung angeordnet ist.

6. Fahrzeugdach nach einem der Ansprüche 1 bis 5,
**dadurch gekennzeichnet, dass** das Schwenklagerteil (20) beim Öffnen des Daches (1) seine Schwenkstellung relativ zum Steuerlenker (22) verändert und dabei das Steuerteil (24) eine inaktive Stellung einnimmt, so dass das Schwenklagerteil (20) eine Ausgleichsbewegung entlang der Führung (21) des Steuerlenkers (22) ausführen kann.

7. Fahrzeugdach nach einem der Ansprüche 1 bis 6,
**dadurch gekennzeichnet, dass** eine karosserieseitige Abstützung (29) vorgesehen ist, die die Heckscheibe (14) beim Öffnen des Daches (1) vor Erreichen der Ablagestellung des hinteren Dachteils (3) bzw. der C-Säulen abstützt.

8. Fahrzeugdach nach einem der Ansprüche 1 bis 7,
**dadurch gekennzeichnet, dass** auf dem letzten Bewegungsweg beim Öffnen des Daches (1) die auf der Abstützung (29) aufliegende Heckscheibe (14) mittels des Schwenklagerteils (20) den ausgeschwenkten Steuerlenker (22) in seine erste Schwenkstellung gegen den Anschlag (27) zurückschwenkt, während das hintere Dachteil (3) bzw. die C-Säulen (12) in ihre Ablagestellung relativ zur Heckscheibe (14) absinken.

9. Fahrzeugdach nach Anspruch 8,
**dadurch gekennzeichnet, dass** das Schwenklagerteil (20) auf dem letzten Bewegungsweg beim Öffnen des Daches (1) eine Längsbewegung an der Führung (21) in die äußere Stellung ausführt.

10. Fahrzeugdach nach einem der Ansprüche 4 bis 9,
**dadurch gekennzeichnet, dass** das Steuerteil als Steuernocken (24) gebildet ist, der drehfest mit dem Schwenklagerteil (20) verbunden ist und sich an einer am Steuerlenker (22) gebildeten Stützfläche (25) abstützt.

11. Fahrzeugdach nach einem der Ansprüche 1 bis 10,
**dadurch gekennzeichnet, daß** die Heckscheibe (14) beim Ablegen des Daches (1) eine Relativbewegung gegenüber der Abstützung (29) ausführt.

12. Fahrzeugdach nach einem der Ansprüche 1 bis 11,
**dadurch gekennzeichnet, daß** die zumindest eine Abstützung (29) eine Rolle enthält, auf der die Heckscheibe (14) aufliegt.

## Claims

1. Vehicle roof (1) of a convertible, with a front roof part (2) and a rear roof part (3) which contains a rear window (14) and is coupled to the vehicle body, the roof parts being connected to each other in an articulated manner and being displaceable between a closed position over the vehicle interior and a put-away position at the rear, wherein the rear window (14), which is mounted pivotably on the rear roof part (3), is connected at its front edge to the front roof part (2) by means of a control link (22) of a control kinematics, which control link (22) is mounted pivotably on the front roof part (2), and, in the put-away position, said rear window (14) takes up a position in which it is raised in relation to the rear roof part (3), **characterized in that** a pivot bearing part (20) of the control kinematics, said pivot bearing part being mounted on the front side of the rear window (14), is held displaceably on a guide (21) of the control link (22).

2. Vehicle roof according to Claim 1, **characterized in that** the rear roof part (3) has lateral C pillars (12), and **in that** the rear window (14) is mounted in a manner such that it can pivot relative to the C pillars (12) about a pivot axis (16) arranged at its rear edge (15).

3. Vehicle roof according to Claim 1 or 2, **characterized in that** a stop (27) for limiting the pivoting travel of the control link (22) is provided.

4. Vehicle roof according to one of Claims 1 to 3, **characterized in that** the pivot bearing part (20) is guided displaceably on the guide (21) between an inner position, which is adjacent to the pivot axis (23) of the control link (22), and an outer position.

5. Vehicle roof according to one of Claims 1 to 4, **characterized in that**, when the roof (1) is closed and in a first pivoted position of the control link (22), the pivot bearing part (20) is arranged in the outer position by means of a control part (24).

6. Vehicle roof according to one of Claims 1 to 5, **characterized in that**, when the roof (1) is opened, the pivot bearing part (20) changes its pivoted position relative to the control link (22) and, in the process, the control part (24) takes up an inactive position such that the pivot bearing part (20) can execute a compensating movement along the guide (21) of the control link (22).

7. Vehicle roof according to one of Claims 1 to 6, **characterized in that** a support (29) is provided on the vehicle body, said support supporting the rear window (14) during the opening of the roof (1) before the put-away position of the rear roof part (3) and of the C pillars is reached.

8. Vehicle roof according to one of Claims 1 to 7, **characterized in that**, over the course of the final movement during the opening of the roof (1), the rear window (14), which rests on the support (29), uses the pivot bearing part (20) to pivot the pivoted-out control link (22) back into its first pivoted position against the stop (27) while the rear roof part (3) and the C pillars (12) drop into their put-away position relative to the rear window (14).

9. Vehicle roof according to Claim 8, **characterized in that**, over the course of the final movement during the opening of the roof (1), the pivot bearing part (20) executes a longitudinal movement on the guide (21) into the outer position.

10. Vehicle roof according to one of Claims 4 to 9, **characterized in that** the control part is formed as a control cam (24) which is connected in a rotationally fixed manner to the pivot bearing part (20) and is supported on a supporting surface (25) formed on the control link (22).

11. Vehicle roof according to one of Claims 1 to 10, **characterized in that**, during the putting away of the roof (1), the rear window (14) executes a relative movement in relation to the support (29).

12. Vehicle roof according to one of Claims 1 to 11, **characterized in that** the at least one support (29) contains a roller on which the rear window (14) rests.

## Revendications

1. Toit de véhicule (1) d'un cabriolet comprenant une partie de toit avant (2) et une partie de toit arrière (3) articulée sur la carrosserie et comportant une lunette arrière (14), lesquelles parties de toit sont reliées de manière articulée l'une à l'autre et peuvent être déplacées entre une position de fermeture au-dessus de l'habitacle du véhicule et une position de rangement côté arrière,
la lunette arrière (14) montée à pivotement sur la partie de toit arrière (3) étant reliée, au niveau de son bord avant, à la partie de toit avant (2) au moyen d'un bras de commande (22), monté à pivotement sur la partie de toit avant (2), d'une cinématique de commande, et occupant, dans la position de rangement, une position relevée par rapport à la partie de toit arrière (3),
**caractérisé en ce**
**qu'**une partie de palier de pivotement (20), montée du côté avant sur la lunette arrière (14), de la cinématique de commande est reçue de manière coulissante sur un guide (21) du bras de commande (22) .

2. Toit de véhicule selon la revendication 1,
**caractérisé en ce que** la partie de toit arrière (3) comprend des montants C latéraux (12), et **en ce que** la lunette arrière (14) est montée de manière à pouvoir pivoter par rapport aux montants C (12) autour d'un axe de pivotement (16) disposé sur son bord arrière (15).

3. Toit de véhicule selon la revendication 1 ou 2,
**caractérisé en ce qu'**une butée (27) est prévue pour limiter la course de pivotement du bras de commande (22).

4. Toit de véhicule selon l'une quelconque des revendications 1 à 3,
**caractérisé en ce que** la partie de palier de pivotement (20) est guidée de manière déplaçable sur le guide (21) entre une position intérieure adjacente à l'axe de pivotement (23) du bras de commande (22) et une position extérieure.

5. Toit de véhicule selon l'une quelconque des revendications 1 à 4,
**caractérisé en ce que**, lorsque le toit (1) est fermé et que le bras de commande (22) est dans une première position de pivotement, la partie de palier de pivotement (20) est disposée dans la position extérieure au moyen d'une partie de commande (24).

6. Toit de véhicule selon l'une quelconque des revendications 1 à 5,
**caractérisé en ce que**, lorsque le toit (1) est ouvert, la partie de palier de pivotement (20) change de position de pivotement par rapport au bras de commande (22) et, en l'occurrence, la partie de commande (24) occupe une position inactive, de telle sorte que la partie de palier de pivotement (20) puisse effectuer un déplacement de compensation le long du guide (21) du bras de commande (22).

7. Toit de véhicule selon l'une quelconque des revendications 1 à 6,
**caractérisé en ce qu'**un support (29) situé du côté de la carrosserie est prévu, lequel supporte la lunette arrière (14) lors de l'ouverture du toit (1) avant que la position de rangement de la partie de toit arrière (3) et des montants C ne soit atteinte.

8. Toit de véhicule selon l'une quelconque des revendications 1 à 7,
**caractérisé en ce que**, sur la dernière course de déplacement lors de l'ouverture du toit (1), la lunette arrière (14) reposant sur le support (29) ramène par pivotement, au moyen de la partie de palier de pivotement (20), le bras de commande (22) pivoté vers l'extérieur à sa première position de pivotement contre la butée (27), tandis que la partie de toit arrière (3) et les montants C (12) s'abaissent dans leur position de rangement par rapport à la lunette arrière (14).

9. Toit de véhicule selon la revendication 8,
**caractérisé en ce que**, sur la dernière course de déplacement lors de l'ouverture du toit (1), la partie de palier de pivotement (20) effectue un déplacement longitudinal sur le guide (21) dans la position extérieure.

10. Toit de véhicule selon l'une quelconque des revendications 4 à 9,
**caractérisé en ce que** la partie de commande est réalisée sous forme de came de commande (24) qui est reliée de manière solidaire en rotation à la partie de palier de pivotement (20) et s'appuie sur une surface de support (25) formée sur le bras de commande (22).

11. Toit de véhicule selon l'une quelconque des revendications 1 à 10,
**caractérisé en ce que**, lors du rangement du toit (1), la lunette arrière (14) effectue un déplacement relatif par rapport au support (29).

12. Toit de véhicule selon l'une quelconque des revendications 1 à 11,
**caractérisé en ce que** l'au moins un support (29) comporte un galet sur lequel repose la lunette arrière (14).
